# EUROPÄISCHE PATENTSCHRIFT

(11) **EP 0 585 607 B1**
(45) Veröffentlichungstag und Bekanntmachung des Hinweises auf die Patenterteilung: **15.03.1995**
(21) Anmeldenummer: 93112123.0
(22) Anmeldetag: 29.07.1993
(51) Int. Cl.: A47J 31/44

(54) **Espressomaschine**
Espresso coffee machine
Machine à café express

(30) Priorität: 07.08.1992 DE 4226151
(43) Veröffentlichungstag der Anmeldung: 09.03.1994
(73) Patentinhaber: Braun Aktiengesellschaft, Frankfurt am Main (DE)
(72) Erfinder: Littmann, Ludwig, D-65824 Schwalbach (DE); Schäfer, Gerhard, D-60437 Frankfurt am Main (DE); Hufnagl, Walter, D-65843 Sulzbach (DE); Klawuhn, Manfred, D-60322 Frankfurt am Main (DE); Müller, Roland, D-63303 Dreieich (DE); Peter, Andreas, D-65933 Frankfurt am Main (DE)

(56) Entgegenhaltungen:
- EP-A- 0 279 782
- DE-A- 2 922 022
- DE-A- 2 944 264
- DE-U- 7 915 161
- DE-U- 9 109 023
- PATENT ABSTRACTS OF JAPAN vol. 14, no. 306 (C-0735)3. Juli 1990 & JP-A-02 102 614 (TOKYO GAS CO LTD) 16. April 1990

## Beschreibung

Die Erfindung betrifft eine Espressomaschine mit einer Austrittsöffnung für das zubereitete Espressogetränk und einer unter der Austrittsöffnung im Abstand angeordneten Abstellplatte, die durch einen Gerätefuß abgestützt wird und auf der ein das Getränk aufnehmender Auffangbehälter abstellbar ist, wobei unterhalb der Abstellplatte ein Aufnahmeraum für überschüssige Flüssigkeit vorhanden ist und wobei zwischen der Abstellplatte und dem Gerätefuß eine mechanische Höhenverstelleinrichtung vorgesehen ist, die eine Veränderung des Abstandes ermöglicht.

Aus der Firmendruckschrift "Braun Programmübersicht 1992" vom Januar 1992, Seite 49, ist bereits eine Espressomaschine bekannt, bei der der Gerätefuß eine Ausnehmung aufweist, in die die mittige Einsenkung einer Auffangschale einsetzbar ist. Die Auffangschale wird durch eine Abstellplatte abgedeckt. Sowohl die Auffangschale als auch die Abstellplatte sind abnehmbar und daher leicht zu reinigen. Auf die Abstellplatte können zur Aufnahme des zubereiteten Espressos sowohl ein oder zwei Tassen als auch eine Kanne plaziert werden. Bei der unterschiedlichen Höhe der Auffanggefäße muß der Abstand zwischen Austrittsöffnung und Abstellplatte an die Höhe des größten Gefäßes angepaßt sein. Dies hat zur Folge, daß bei niedriger Gefäßhöhe der Abstand zwischen der Austrittsöffnung und dem Gefäß so groß ist, daß der Espresso über den Rand des Gefäßes hinaus spritzen oder gar fließen kann. Zudem kann es zu einer unerwünscht raschen Abkühlung des Getränks kommen.

Um die oben erwähnten Nachteile zu vermeiden, ist aus der DE-A1-29 22 022 bereits eine Getränkezubereitungsmaschine der eingangs beschriebenen Art bekannt, bei der die am Gerätefuß angeordnete Auffangschale mit seiner Abstellplatte über eine mechanische Höhenverstelleinrichtung gegenüber der Austrittsöffnung höhenverstellbar ist. Dabei besteht die Höhenverstelleinrichtung unter anderem aus einer am Gerätefuß seitlich angebrachten Führungshülse, die auf einer in Längsrichtung der Brühgetränkemaschine angeordneten Säule entlangschiebbar und somit gegenüber der Austrittsöffnung höhenverstellbar ist. Um die Hülse und somit den Gerätefuß auf jeder beliebigen Höhe arretieren zu können, weist die Säule einen ovalen Querschnitt auf, die durch ihre Drehung über eine Handhabe gegenüber der Bohrung der Säule verdreht werden kann, um zwischen der Säule und der Hülse eine Verklemmung und somit eine Arretierung zwischen beiden Teilen zu erzielen. Abgesehen von dem verhältnismäßig aufwendigen Aufbau der Höhenverstelleinrichtung ist die Handhabung weniger vorteilhaft, da bei einer Höhenverstellung von Hand sowohl eine axiale wie eine sich anschließende Verdrehbewegung an der Handhabe ausgeführt werden muß. Dies führt leicht dazu, daß ein auf der Abstellplatte sich befindendes Gefäß leicht herunterfallen kann, da bei einem derartigen Verstellvorgang Ruckelbewegungen nahezu unvermeidbar sind. Ein weiterer Nachteil besteht darin, daß, wenn beispielsweise Getränke über die Abstellplatte in die im Stelltisch ausgebildete Ausnehmung fließen, diese nur schwer reinigbar ist.

Weiterhin ist aus dem DE-U1-79 15 161 eine weitere Höhenverstelleinrichtung für eine Espressomaschine bekannt, bei der die Abstellplatte, unabhängig vom Gerätefuß, lediglich nur in zwei verschiedenen Höhenlagen über am Gerät ausgebildete Schlitze eingesetzt werden kann. Durch die Trennung der Abstellplatte gegenüber dem Gerätefuß ergibt sich der Nachteil, daß am Gefäß vorbeifließendes Getränk auf den Gerätefuß trifft, was zwangsweise zu einem Verspritzen der Espressomaschine, der Abstellfläche und eventuell in der Nähe der Espressomaschine stehender anderer Küchengeräte durch das Getränk führt.

Aufgabe der Erfindung ist es daher, eine Espressomaschine zu schaffen, bei der die Handhabung der Höhenverstelleinrichtung verbessert und vereinfacht wird, bei der mit der Höhenverstelleinrichtung trotz einfacher Ausgestaltung eine Vielzahl von verschiedenen Positionen erreicht werden kann und bei der eine einfache Reinigung des Auffangraumes möglich ist.

Diese Aufgabe wird erfindungsgemäß dadurch gelöst, daß die Abstützung der Abstellplatte auf dem Gerätefuß über eine dazwischen liegendene Auffangschale erfolgt, die den Auffangraum für die überschüssige Flüssigkeit bildet und die mit dem Gerätefuß lösbar verbunden ist, daß auch die Abstellplatte lösbar mit der Auffangschale verbunden ist, daß die Höhenverstelleinrichtung auf der Grundlage eines Schraubentriebs arbeitet und daß der Schraubentrieb entweder zwischen dem Gerätefuß und der Auffangschale oder zwischen der Auffangschale und der Abstellplatte wirkt, wobei im ersten Fall Gerätefuß und Auffangschale und im zweiten Fall Auffangschale und Abstellplatte relativ gegeneinander beweglich sind. Hierdurch kann der Abstand zwischen Austrittsöffnung und Abstellplatte mit einfachen Mitteln in vielen Stellungen variiert und somit der Höhe des jeweiligen Auffanggefäßes optimal angepaßt werden kann. Dabei kann der Abstand der Abstellplatte gegenüber den Austrittsöffnungen so eingestellt werden, daß der Rand des Auffangbehälters geringfügig unterhalb der Austrittsöffnungen angeordnet ist. Bei Bedarf ist es sogar möglich, den Abstand so einzustellen, daß die Ausgießöffnungen sogar in den Auffangbehälter hineinragen.

Durch die Erfindung können endlich die stets lästigen Ausrichtvorgänge des Auffangbehälters unter den Austrittsöffnungen erheblich verbessert werden und das Getränk gelangt, ohne daß Anteile seitlich am Auffangbehälter vorbeifließen, vollständig in den Auffangbehälter. Auch die Verwendung von größeren Auffangbehältern stellt nach der Erfindung kein Problem mehr dar, da der Abstand X durch Absenken der Abstellplatte derart vergrößert wird, bis auch das für die Espressomaschine zu verwendende höchste Gefäß unterstellbar ist. Der Schraubentrieb sollte also in seiner Höhenverstellbarkeit so ausgelegt werden, daß die für Espresso üblichen Gefäße unter den Austrittsöffnungen Platz finden.

Durch den erfindungsgemäßen Schraubentrieb zwischen der Auffangschale und der Abstellfläche ergibt sich eine besonders einfache Handhabung, da bei Verdrehung der Auffangschale die Abstellfläche gegenüber der Auffangschale bzw. gegenüber dem Gerätefuß höhenverstellt wird, wobei in verschiedenen Drehstellungen der Schraubentrieb selbsttätig arretiert wird und so ein fester Sitz der Abstellfläche erreicht wird. Dabei werden Ruckelbewegungen an der Abstellfläche vermieden, da eine Drehbewegung, also in nur einer Bewegungsrichtung, von der Hand einer Bedienungsperson leicht und gleichmäßig ausführbar ist. Des weiteren ist ein Schraubentrieb zwischen der Abstellfläche und der Auffangschale leicht und kostengünstig herstellbar, da außer der Abstellplatte die in Frage stehenden Bauteile aus Kunststoff geformt sein können, so daß derartige Schraubentriebe leicht beim Ausformen der Bauteile ohne nennenswerten Kostenaufwand mit ausgeformt werden können. Durch den Einsatz einer vom Gerätefuß lösbaren Auffangschale, von der auch die Abstellplatte entfernbar ist, läßt sich diese Anordnung besonders einfach von Hand reinigen und anschließend wieder so zusammensetzen, daß wieder eine höhenverstellbare Abstellplatte mit darunter angeordneter Auffangschale entsteht.

Eine besonders bedienungsfreundliche Anordnung ergibt sich, wenn der Schraubentrieb zwischen der Auffangschale und der Abstellfläche ausgebildet ist. Dabei kann nämlich der Schraubentrieb besonders einfach in die vom Gerät abnehmbaren Bauteile integriert werden, was die Herstellung vereinfacht. Dabei ist es möglich, daß sich bei Betätigung des Schraubentriebs die Abstellplatte gegenüber der Auffangschale verdreht.

Vorteilhafter ist es aber, wenn sich bei Betätigung des Schraubentriebs die Auffangschale gegenüber der Abstellplatte verdreht. Hierdurch ergibt sich eine besonders einfache Handhabung, da beim Betätigen des Schraubentriebs sich nicht der auf der Abstellplatte abgestellte Auffangbehälter verdreht, so daß der an dem Auffangbehälter üblicherweise angebrachte Henkel sich nicht von der Bedienungsseite wegdrehen kann. Es ist aber dennoch auch durchaus denkbar, daß der Schraubentrieb zwischen dem Gerätefuß und der Auffangschale angeordnet ist. Dabei ist es dann notwendig, daß sich bei Betätigung des Schraubentriebs die Auffangschale gegenüber dem Gerätefuß verdreht, wobei es dann besser ist, wenn der Gerätefuß ein Teil mit dem Gehäuse der Espressomaschine bildet Bei dieser Variante sollte ebenfalls die Abstellplatte verdrehsicher aber höhenverstellbar sein.

Wählt man in einer Weiterbildung der Erfindung als Schraubentrieb, gleichgültig ob dieser zwischen der Auffangschale und der Abstellplatte oder zwischen der Auffangschale und dem Gerätefuß angeordnet ist, ein selbsthemmendes Gewinde, so ergibt sich hieraus der Vorteil, daß die Höhenverstelleinrichtung in jeder beliebigen Drehstellung fixiert werden kann, ohne daß zur Fixierung zusätzliche Rastelemente nötig wären. Hierdurch kann also der Rand jedes Auffangbehälters optimal nahe an die Austrittsöffnungen herangeführt werden, indem bei auf der Abstellplatte abgestelltem Auffangbehälter die Höhenverstelleinrichtung so lange verstellt wird, bis der Rand des Auffangbehälters den gewünschten Abstand zu den Austrittsöffnungen aufweist. Wählt man allerdings als Schraubentrieb ein nicht-selbsthemmendes Gewinde, so ergeben sich aufgrund der größeren Steigung des Gewindes bereits bei kleinen Drehwinkeln verhältnismäßig große Höhenverstellungen, wobei dann allerdings Rastelemente nötig werden, die eine Arretierung der Höhenverstelleinrichtung in verschiedenen Positionen bewirken.

In einer bevorzugten Weiterbildung der Erfindung bei der Verwendung eines nicht-selbsthemmenden Gewindes wird vorgeschlagen, daß die Auffangschale durch ein Rastgesperre in mehreren Winkelstellungen arretierbar ist. Hierdurch kann mit einfachen Mitteln die Abstellplatte durch Drehen der Auffangschale in unterschiedliche Höhenlagen gebracht und dort festgestellt werden. Auf diese Weise läßt sich der Abstand der Abstellplatte zur Austrittsöffnung mit einem Handgriff, der beispielsweise aus einer radial an der Abstellplatte herausragenden Ringfläche besteht, an die jeweilige Gefäßhöhe optimal anpassen. Das Rastgesperre sorgt dabei selbsttätig für die Arretierung in der jeweiligen Stellung, so daß es hierzu keiner zusätzlichen Betätigung bedarf.

In einer Weiterbildung der Erfindung ist vorgesehen, daß die Abstellplatte mit der Auffangschale durch eine Vertikalführung an einer Drehung gegenüber dem Gerätefuß gehindert ist. Hierduch entfernt sich bei Drehung der Auffangschale die Abstellplatte gegenüber der Auffangschale und dem Gerätefuß. Sinngemäß gilt dies auch bei verdrehfester Auffangschale.

Zur Bildung des Rastgesperres kann erfindungsgemäß vorgesehen sein, daß der Boden der Auffangschale auf seiner Unterseite Vorsprünge bzw. Ausnehmungen aufweist, denen am Gerätefuß ausgebildete und komplementär geformte Ausnehmungen bzw. Vorsprünge gegenüberliegen. Ein derartiges Rastgesperre hat den Vorteil, daß es durch das Eigengewicht von Auffangschale, Abstellplatte und zusätzlich dem darauf befindlichen Gefäß in seiner Einrastposition gehalten wird. Weitere Haltemittel sind entbehrlich. Die Sperrkraft paßt sich selbsttätig dem jeweiligen Belastungszustand an.

Um mit einem vergleichsweise geringen Drehwinkel eine deutliche Veränderung der Höhenlage der Abstellplatte zu erreichen, weist der Schraubentrieb vorteilhafterweise mehrere Schraubengänge auf. Hierdurch wird der Bedienungskomfort erhöht und es wird eine leichtere Einführung in die Gewindegänge erreicht. Gleichzeitig wird hierdurch die Abnehmbarkeit der Abstellfläche und schnelle Montage dieser gegenüber der Auffangschale erreicht.

Erfindungsgemäß kann weiterhin vorgesehen sein, daß die Auffangschale einen zylindrischen Topf aufweist und daß die Abstellplatte an ihrer Unterseite mit einem zylindrischen Ansatz versehen ist, der längsverschieblich und über den Schraubentrieb in dem Topf der Auffangschale gelagert ist, wobei am Topf oder am Ansatz Schraubenflächen vorgesehen sind, die mit Gegenflächen am Ansatz oder am Topf den Schraubentrieb bilden. Hierdurch wird auf einfache Weise mit Hilfe der Auffangschale ein Schraubentrieb gebildet, der leicht herstellbar ist und das Abnehmen der Abstellplatte von der Auffangschale ermöglicht. Gleichzeitig läßt sich die Abstellplatte leicht über ihren Ansatz im Topf zentrieren.

Bei einer vorteilhaften Ausgestaltung des erfindungsgemäßen Geräts kann vorgesehen sein, daß der Ansatz der Abstellplatte als zylindrischer Kragen ausgebildet ist und daß die Schraubenflächen durch Ausschnitte in dem Kragen gebildet sind. In einer alternativen Ausführung können die Schraubenflächen durch nach innen vorspringende Stufen in der Wand des Topfes gebildet sein. Auf beide Weisen lassen sich die Schraubenflächen mit einfachen Formwerkzeugen herstellen, da die Teile der Formwerkzeuge nur axial zueinander bewegt werden müssen. Außerdem ermöglicht die Lage der Schraubenflächen das Abnehmen der Abstellplatte, ohne daß es einer Drehung der Auffangschale bedarf.

Erfindungsgemäß ist weiterhin vorgesehen, daß die Gegenflächen durch die Enden von zur Schraubenachse parallelen Rippen an der Innenwand des Topfes oder der Außenwand des Ansatzes gebildet sind. Auch dies trägt zur einfachen Herstellbarkeit bei.

Eine weitere vorteilhafte Ausführungsform des Schraubentriebs ergibt sich dadurch, daß die drei Schraubenflächen durch je zwei nach innen hervorspringende und parallel zueinander verlaufende Wandflächen gebildet werden, die je eine Gewindenut bilden, in die an der Außenfläche des Kragens hervorspringende Zapfen als Gegenflächen eingreifen. Hierdurch wird erreicht, daß die Abstellfläche über den Schraubentrieb mit der Auffangschale in festem und zentriertem Eingriff steht, so daß die Abstellfläche nicht ohne weiteres aus der Auffangschale herausgehoben werden kann.

Eine spritztechnisch einfache Herstellung dieses mit zwei Wandflächen versehenen Gewindegangs ergibt sich dadurch, daß die untere Wandfläche durch eine angeformte Vertiefung am Topf gebildet wird, wobei die Auffangschale und die Abstellfläche mit ihrem Kragen aus Kunststoff hergestellt sind.

In einer Weiterbildung der Erfindung ist vorgesehen, daß jede obere Wandfläche durch eine an der Innenwandung des Topfes angeformte Rippe gebildet wird. Durch die an der Innenwand angeformten Rippen und die Vertiefungen am Topf läßt sich die Auffangschale spritztechnisch besonders einfach herstellen, ohne daß aufwendige Einsätze erforderlich wären.

Um ein Verkanten der Abstellfläche an ihrem zylindrischen Kragen zu vermeiden, ist in einer Weiterbildung der Erfindung vorgesehen, daß an der Außenfläche des Kragens mindestens drei am Umfang verteilte und nach oben sich erstreckende Stege ausgebildet sind, die an der Innenwand des Topfes der Auffangschale gleitend anliegen. Dadurch, daß die Stege an der im Durchmesser verhältnismäßig großen Außenfläche des Kragens ausgebildet sind, führen geringe Toleranzabweichungen bei der Herstellung der Abstellfläche und der Auffangschale nicht zu großen Kippbewegungen der Abstellfläche, so daß stets eine leichtgängige Führung zwischen dem Kragen und der Auffangschale erreicht wird.

Damit die Abstellfläche mit ihrem Kragen in der tiefsten Stellung aus der Auffangschale entfernt werden kann und gleichzeitig in ihrer Bewegung nach oben im Betrieb begrenzt ist, wird in einer Weiterbildung der Erfindung vorgeschlagen, daß die Gewindenuten an ihren dem Boden nahen Enden offen und an ihren anderen, oberen Enden von einer Wand verschlossen sind.

Um eine klemmfreie Führung der Abstellplatte an der Auffangschale zu gewährleisten, kann nach einem weiteren Vorschlag der Erfindung eine zentrale, aus Lagerzapfen und Führungshülse bestehende Teleskopführung geringen Durchmessers vorgesehen sein, die einerseits mit der Abstellplatte und andererseits mit der Auffangschale verbunden ist.

Zur Sicherung der Abstellplatte gegen Verdrehen besteht die Vertikalführung aus einem an der Abstellplatte ausgebildeten radialen Ansatz, der sich in tangentialer Richtung am Gehäuse des Geräts abstützt. Hierdurch wird in einfacher Form gewährleistet, daß bei Drehung der Auffangschale sich die Abstellplatte höhenverschiebt, wobei dann letztere gleitend am Gehäuse hoch- bzw. herunterfährt.

Die Erfindung wird nachfolgend anhand eines Ausführungsbeispiels näher erläutert, das in der Zeichnung dargestellt ist. Es zeigen
- Fig. 1: einen Querschnitt durch den Fuß einer ersten Ausführungsform,
- Fig. 2: einen Querschnitt durch den Fuß einer anderen Ausführungsform eines erfindungsgemäßen Geräts zum Zubereiten von heißen Getränken und
- Fig. 3: einen Querschnitt durch die Auffangschale mit Abstellplatte eines weiteren Ausführungsbeispiels.

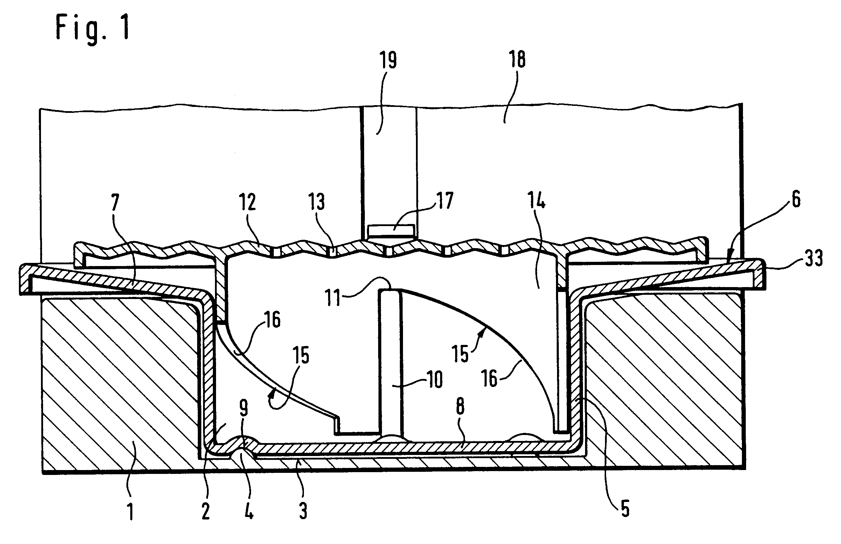

Bei dem in Figur 1 gezeigten Ausführungsbeispiel weist der Gerätefuß 1 des Heißgetränkebereiters einen zylindrischen, nach oben offenen Aufnahmeraum 2 auf, der von einer im Gerätefuß 1 angeordneten Ausnehmung gebildet wird. Auf der ebenen Bodenfläche 3 des Aufnahmeraums 2 sind in gleichmäßigem Abstand voneinander und von der Zylinderachse drei Vorsprünge 4 mit kugeliger Oberfläche angeordnet. In dem Aufnahmeraum 2 befindet sich ein zylindrischer Topf 5 einer Auffangschale 6. Der Außendurchmesser des Topfes 5 ist nur um das erforderliche Bewegungsspiel kleiner als der Innendurchmesser des Aufnahmeraums 2, so daß die Auffangschale 6 in dem Aufnahmeraum 2 leicht drehbar ist.

Der Rand des Topfes 5 ist als kreisringförmige Scheibe 7 ausgebildet, die sich über den Außenrand des Gerätefußes 1 hinaus erstreckt und trichterartig zum Topf 5 hin geneigt ist. Der Boden 8 des Topfes 5 weist auf seiner Unterseite kugelkalottenförmige Ausnehmungen 9 auf, die durch Hochwölbungen des Bodens 8 gebildet sind. Die Zahl der Ausnehmungen 9 beträgt wenigstens drei oder ein Vielfaches davon und jeweils drei Ausnehmungen 9 sind in der gleichen Weise positioniert wie die Vorsprünge 4. Die Ausnehmungen 9 bilden mit den Vorsprüngen 4 ein Rastgesperre, indem die drei Vorsprünge 4 jeweils in drei Ausnehmungen 9 einrasten. Sind drei Ausnehmungen 9 vorhanden, so ergeben sich drei Winkelstellungen im Abstand von 120°, in denen die Auffangschale 6 durch das Rastgesperre gehalten werden kann. Durch eine höhere Zahl von Ausnehmungen 9, beispielsweise sechs oder neun, ergibt sich eine größere Zahl von Raststellungen mit entsprechend feinerer Abstufung. An der Innenwand des Topfes 5 befinden sich in gleichmäßigem Abstand voneinander drei zur Zylinderachse parallele Rippen 10, deren dem Topfrand benachbarte Enden eine gewölbte Gegenfläche 11 für einen Schraubentrieb bilden.

Die Auffangschale 6 trägt eine Abstellplatte 12 mit Ablaufschlitzen 13. Die Abstellplatte 12 hat an ihrer Unterseite einen zylindrischen Kragen 14, der in den Topf 5 eingreift und an der Innenwand des Topfes 5 geführt ist. Der Kragen 14 weist drei Ausschnitte 15 auf, durch die drei vergleichsweise steile Schraubenflächen 16 gebildet werden. Die Schraubenflächen 16 wirken mit den Gegenflächen 11 der Rippen 10 zusammen, wodurch ein Schraubentrieb gebildet wird, der bei einer Drehung der Auffangschale 6 gegenüber der Abstellplatte 12 die Abstellplatte 12 in Richtung der Zylinderachse gegenüber der Auffangschale 6 bewegt. Selbstverständlich sind auch äquivalente Schraubentriebe möglich. Die Abstellplatte 12 ist durch einen in radialer Richtung über die Scheibe 7 hinausragenden Ansatz 17 an einer Drehung gegenüber dem Gehäuse 18 des Heißgetränkebereiters gehindert, indem der Ansatz 17 in eine vertikale Führungsnut 19 des Gehäuses 18 eingreift.

In Figur 1 ist die Abstellplatte 12 in ihrer niedrigsten Stellung gezeigt, wobei sie mit dem Kragen 14 auf den Rippen 10 ruht. Um die Abstellplatte 12 in eine höhere Lage zu bringen, wird die Auffangschale 6 im Uhrzeigersinn gedreht, wobei sie am Außenrand der Scheibe 7 gegriffen werden kann. Durch eine solche Drehung bewegen sich die Rippen 10 gegen die Schraubenflächen 16 und die Gegenflächen 11 gleiten an den Schraubenflächen 16 entlang und bewirken dadurch ein Anheben der Abstellplatte 12, wenn diese über ihren Ansatz 17 in der Führungsnut 19 dabei nach oben entlang gleitet und dadurch drehfest am Gehäuse 18 gehalten wird. Bei der Drehung werden die Ausnehmungen 9 von den Vorsprüngen 4 abgehoben und der Boden 8 gleitet über die Vorsprünge 4 hinweg, bis nach einem Drehwinkel von beispielsweise 120° die Ausnehmungen 9 wieder auf die Vorsprünge 4 aufrasten. Je nach Größe des Drehwinkels, um den die Auffangschale 6 verdreht worden ist, ergibt sich eine unterschiedliche Höhenlage der Abstellplatte 12. Die maximale Hubhöhe der Abstellplatte 12 wird durch die Höhe der Schraubenfläche 16 bestimmt.

Das Festhalten der Abstellplatte 12 in einer angehobenen Stellung wird allein durch das Eingreifen der Vorsprünge 4 in die Ausnehmungen 9 gewährleistet, da die Steigung der Schraubenflächen 16 außerhalb des Selbsthemmungsbereichs liegt. Die Vorsprünge 4 werden durch das Eigengewicht der Auffangschale 6 und der Abstellplatte 12 in Eingriff gehalten. Beim Aufstellen eines Auffanggefäßes auf die Abstellplatte 12 wird durch dessen Gewicht der Eingriff entsprechend verstärkt. Durch Drehung der Auffangschale 6 entgegen dem Uhrzeigersinn kann die Abstellplatte 12 wieder abgesenkt werden. Die Abstellplatte 12 wird an ihrer zylindrisch ausgebildeten Mantelfläche des Kragens 14 in der zylindrischen Ausnehmung 2 ausreichend geführt, so daß auch bei vollständig ausgefahrener Abstellplatte 12 diese noch nicht kippt. Hierzu können auch gesonderte Führungseinrichtungen (nicht dargestellt) in Form etwa einer Kulissenführung verwendet werden.

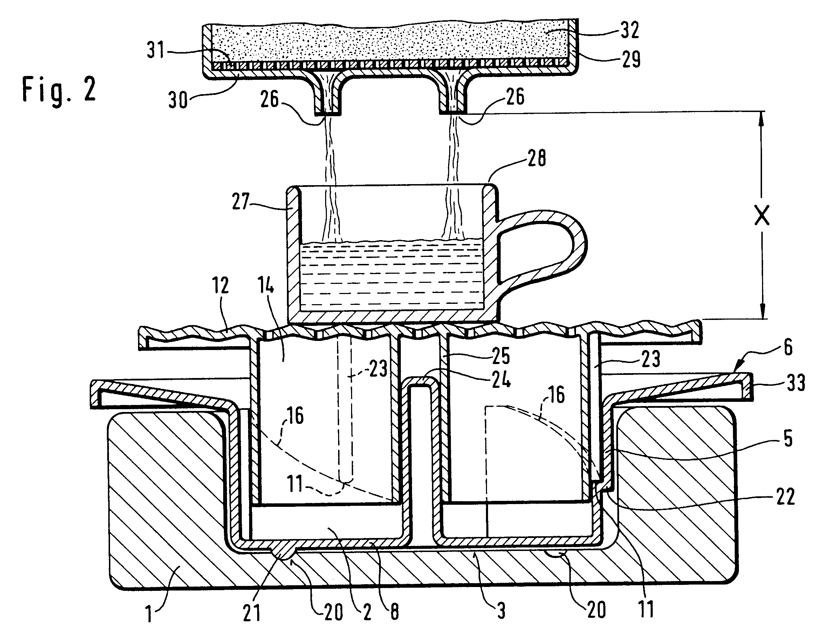

Der grundsätzliche Aufbau und die Wirkungsweise der in Figur 2 dargestellten Variante stimmt mit dem Ausführungsbeispiel gemäß Figur 1 überein. Die bauliche Gestaltung des Rastgesperres und des Schraubentriebs ist jedoch abweichend.

So sind zur Bildung des Rastgesperres in der Bodenfläche 3 des Gerätefußes 1 kugelkalottenförmige Ausnehmungen 20 in gleichmäßigem Umfangsabstand voneinander vorgesehen und der Boden 8 der Auffangschale 6 hat an seiner Unterseite entsprechend positionierte, kugelige Vorsprünge 21, die in die Ausnehmungen 20 einrasten.

Die Schraubenflächen 16 des Schraubentriebs sind durch nach innen vorspringende Stufen 22 in der Wand des Topfes 5 gebildet und der Kragen 14 der Abstellplatte 12 weist an seiner Außenseite Rippen 23 auf, die an ihren unteren Enden die Gegenflächen 11 haben. Da hierbei der Kragen 14 nicht durch Ausschnitte 15 unterbrochen ist, kann seine Wandstärke geringer sein.

Zur Verbesserung der Führung der Abstellplatte 12 an der Auffangschale 6 weist die Auffangschale 6 koaxial zur Zylinderachse einen zylindrischen Lagerzapfen 24 auf, der in eine an der Unterseite der Abstellplatte 12 angeordnete Führungshülse 25 eingreift. Der Lagerzapfen 24 und die Führungshülse 25 haben einen in Bezug auf die Führungslänge günstigen Durchmesser und sorgen dadurch für eine klemmfreie Führung der Abstellplatte 12.

In Fig. 2 ist auf der Abstellplatte 12 ein in Form einer Espressotasse ausgebildeter Auffangbehälter 27 abgestellt, der mit seinem Rand 28 unterhalb der zwei nebeneinander angeordneten Austrittsöffnungen 26 angeordnet ist. Die Austrittsöffnungen 26 sind Teil eines Siebkorbträgers 29, in dem am Boden 30 ein Sieb 31 eingesetzt ist, auf dem das Espressomehl 32 ruht. Der Siebkorbträger 29 ist in eine in der Zeichnung nicht dargestellte Siebkorbhalteeinrichtung einer Espressomaschine eingesetzt, so daß die in der Zeichnung dargestellte Position sich ergibt. Auf weitere Einzelheiten einer Espressomaschine wird hier nicht näher eingegangen, da sie bereits, wie eingangs erwähnt, allgemein bekannt ist. Bei Höhenverstellung der Abstellplatte 12 wandern die Rippen 23 mit ihren Gegenflächen 11 auf den Schraubenflächen 16 auf bzw. ab, so daß sich der Abstand X verkleinert bzw. vergrößert. Dadurch kann der Rand 28 der Espressotasse 27 ausreichend nahe an die Austrittsöffnungen 26 herangeführt werden, so daß beim Eingießen Wärmeverluste und ein Danebenspritzen bzw. -laufen vermieden werden.

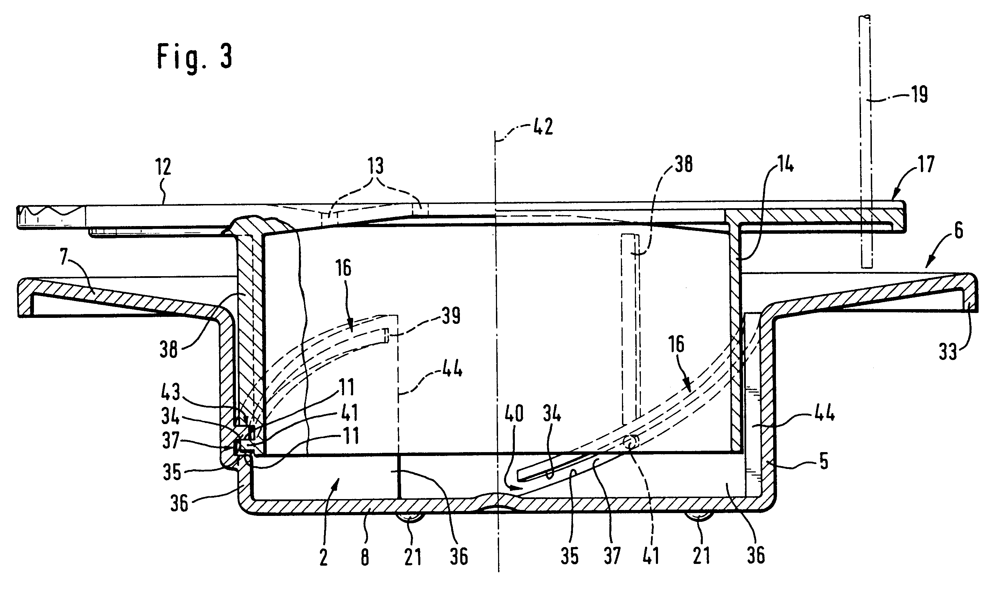

In dem Ausführungsbeispiel nach Fig. 3 wurden für gleich Bauteile gleiche Positionsnummern gewählt. Bei diesem Ausführungsbeispiel wurde der Einfachheit halber der Gerätefuß 1 mit seinem Aufnahmeraum 2, wie er in Fig. 1 dargestellt und in der zugehörigen Beschreibung beschrieben ist, weggelassen. Bei diesem Ausführungsbeispiel ist die Abstellfläche 12 teilweise aus der Auffangchale 6 herausgefahren und die an der Innenwandung des Aufnahmeraums 2 der Auffangschale 6 ausgebildeten Schraubenflächen 16 bestehen aus je zwei nach innen hervorspringenden und parallel zueinander verlaufenden Wandflächen 34, 35, zwischen denen eine Gewindenut 37 ausgebildet ist, die Teil eines nicht-selbsthemmenden Gewindeganges bilden.

An der Innenwandung des Aufnahmeraumes 2 sind um 120° am Umfang versetzt angeordnete, drei Schraubenflächen 16 gleicher Steigung ausgebildet, die auf gleicher Höhe in Nähe des Bodens 8 beginnen und etwa in Höhe der kreisringförmigen Scheibe 7 an der Innenwandung des Aufnahmeraums 2 enden. In Fig. 3 sind, wie in den Figuren 1 und 2, nur zwei Gewindegänge 11, 16 ersichtlich denn der dritte Gewindegang liegt außerhalb der Zeichenebene und ist daher hier nicht sichtbar. Die Gewindeanfänge 40 werden durch die Gewindenuten 37 offengehalten, so daß die an der Außenfläche des zylindrischen Kragens 14 ausgebildeten Zapfen 41 mit ihren nach oben und unten gerichteten Gegenflächen 11 in die Gewindenuten 37 durch Drehung der Auffangschale 6 entgegen dem Uhrzeigersinn in diese eingebracht werden können, um dann bei weiterer Drehung der Auffangschale 6 die Abstellplatte 12 in ihrer Höhe nach oben zu verschieben, wenn diese durch eine Führungsnut oder einen Zapfen 19 drehgesichert ist. Dabei stützt sich der Boden 8 der Auffangschale 6 über die kugeligen Vorsprünge 21 in am Boden des Gerätefußes 1 ausgebildete, ebenfalls kugelige Vertiefungen, wie sie in Fig. 1 dargestellt sind, ab.

Die oberen freien Enden der Gewindenuten 37 sind durch eine Wand 39 nach außen begrenzt, so daß, wenn die Abstellplatte 12 ganz nach oben herausgedreht wurde, die Zapfen 41 an den Wänden 39 anschlagen, wodurch keine weitere Verdrehung der Abstellplatte 12 mehr möglich ist.

Wie aus Fig. 3 deutlich ersichtlich ist, werden die unteren Wandflächen 35 dadurch gebildet, daß die unterhalb der Wandflächen 35 gebildeten Abschnitte 36 zur Mittellinie 42 hin eingezogen und konzentrisch zu dieser bzw. zur Wandfläche des Topfes 5 verlaufen. Von außen betrachtet, bilden die eingezogenen Vertiefungen 36 die Form je eines rechtwinkligen Dreiecks, wobei die Hypotenuse die Seite darstellt, die die untere Wandfläche 35 bildet.

An die Zapfen 41 schließen sich die Ausnehmungen 43 an, in die die oberen Wandflächen 34 eingreifen. Etwa in gleicher Abmessung im Längsschnitt wie die Zapfen 41 schließen sich an die Ausnehmungen 43 nach oben Stege 38 an, die zum Zwecke der Führung für die Abstellplatte 12 an der Innenwandung des Topfes 5 der Auffangschale 6 gleitend anliegen, was allerdings in Fig. 3 nicht dargestellt ist, da zwischen diesen Bereichen stets ein geringes Spiel vorhanden sein muß, um ein Klemmen zu verhindern.

Beim Einsetzen der Abstellplatte 12 über den Kragen 14 in den Aufnahmeraum 2 müssen die Zapfen 41 in dem Bereich angeordnet sein, der sich zwischen der Linie 44 und dem Gewindeeintritt 40 ergibt, d.h, außerhalb der senkrechten Projektion der Gewindegänge 16. Die kugeligen Vorsprünge 21 bilden Rastelemente, wie sie in Fig. 1 beschrieben sind, so daß an dieser Stelle darauf nicht mehr eingegangen wird.

## Patentansprüche

1. Espressomaschine mit einer Austrittsöffnung (26) für das zubereitete Espressogetränk und einer unter der Austrittsöffnung (26) im Abstand (X) angeordneten Abstellplatte (12), die durch einen Gerätefuß (1) abgestützt wird und auf der ein das Getränk aufnehmender Auffangbehälter (27) abstellbar ist, wobei unterhalb der Abstellplatte (12) ein Aufnahmeraum (2) für überschüssige Flüssigkeit vorhanden ist und wobei zwischen der Abstellplatte (12) und dem Gerätefuß (1) eine mechanische Höhenverstelleinrichtung vorgesehen ist, die eine Veränderung des Abstandes (X) ermöglicht,
**dadurch gekennzeichnet,**
daß die Abstützung der Abstellplatte (12) auf dem Gerätefuß (1) über eine dazwischen liegendene Auffangschale (6) erfolgt, die den Aufnahmeraum (2) für die überschüssige Flüssigkeit bildet und die mit dem Gerätefuß (1) lösbar verbunden ist, daß auch die Abstellplatte (12) lösbar mit der Auffangschale (6) verbunden ist, daß die Höhenverstelleinrichtung auf der Grundlage eines Schraubentriebs (11, 16) arbeitet und daß der Schraubentrieb (11, 16) entweder zwischen dem Gerätefuß (1) und der Auffangschale (6) oder zwischen der Auffangschale (6) und der Abstellplatte (12) wirkt, wobei im ersten Fall Gerätefuß (1) und Auffangschale (6) und im zweiten Fall Auffangschale (6) und Abstellplatte (12) relativ gegeneinander beweglich sind.

2. Espressomaschine nach Aspruch 1,
**dadurch gekennzeichnet,**
daß der Schraubentrieb (11, 16) zwischen der Auffangschale (6) und der Abstellfläche (12) ausgebildet ist.

3. Espressomaschine nach Anspruch 2,
**dadurch gekennzeichnet**
daß sich bei Betätigung des Schraubentriebs (11, 16) die Abstellplatte (12) gegenüber der Auffangschale (6) verdreht.

4. Espressomaschine nach Anspruch2,
**dadurch gekennzeichnet,**
daß sich bei Betätigung des Schraubentriebs (11, 16) die Auffangschale (6) gegenüber der Arbeitsplatte (12) verdreht.

5. Espressomaschine nach Anspruch 1,
**dadurch gekennzeichnet,**
daß der Schraubentrieb (11, 16) zwischen dem Gerätefuß (1) und der Auffangschale (6) angeordnet ist.

6. Espressomaschine nach Anspruch 5,
**dadurch gekennzeichnet,**
daß sich bei Betätigung des Schraubentriebs (11, 16) die Auffangschale (6) gegenüber dem Gerätefuß (1) verdreht.

7. Espressomaschine nach Anspruch 2 oder 5,
**dadurch gekennzeichnet,**
daß der Schraubentrieb (11, 16) aus einem selbsthemmenden Gewinde besteht.

8. Espressomaschine nach Anspruch 2 oder 5,
**dadurch gekennzeichnet,**
daß der Schraubentrieb (11, 16) aus einem nicht-selbsthemmenden Gewinde besteht.

9. Espressomaschine nach Anspruch 7 oder 8,
**dadurch gekennzeichnet,**
daß der Schraubentrieb (11, 16) durch ein Rastgesperre (4, 9; 20, 21) in mehreren Winkelstellungen arretierbar ist.

10. Espressomaschine nach Anspruch 4,
**dadurch gekennzeichnet,**
daß die Abstellplatte (12) gegenüber der Auffangschale (6) durch eine Vertikalführung (17, 19) an einer Drehung gegenüber dem Gerätefuß (1) bzw. dem Gehäuse der Espressomaschine gehindert ist.

11. Espressomaschine nach Anspruch 3,
**dadurch gekennzeichnet,**
daß die Auffangschale (6) gegenüber der Abstellplatte (12) im Gerätefuß (1) bzw. am Gehäuse der Espressomaschine an einer Drehung gehindert ist.

12. Espressomaschine nach Anspruch 9,
**dadurch gekennzeichnet,**
daß der Boden (8) der Auffangschale (6) auf seiner Unterseite Vorsprünge (21) bzw. Ausnehmungen (9) aufweist, denen an der Bodenfläche (3) des Gerätefußes (1) ausgebildete und komplementär geformte Ausnehmungen (20) bzw. Vorsprünge (4) gegenüberliegen.

13. Espressomaschine nach Anspruch 2 oder 5,
**dadurch gekennzeichnet,**
daß der Schraubentrieb (11, 16) mehrere Schraubengänge aufweist.

14. Espressomaschine nach Anspruch 2,
**dadurch gekennzeichnet,**
daß die Auffangschale (6) einen zylindrischen Topf (5) aufweist und daß die Abstellplatte (12) an ihrer Unterseite mit einem zylindrischen Ansatz (14) versehen ist, der längsverschieblich und über den Schraubentrieb (11, 16) in dem Topf (5) der Auffangschale (6) gelagert ist, wobei am Topf (5) oder am Ansatz (14) Schraubenflächen (16) vorgesehen sind, die mit Gegenflächen (11) am Ansatz (14) oder am Topf (5) den Schraubentrieb bilden.

15. Espressomaschine nach Anspruch 14,
**dadurch gekennzeichnet,**
daß der Ansatz der Abstellplatte (12) als zylindrischer Kragen (14) ausgebildet ist und daß die Schraubenflächen (16) durch Ausschnitte in dem Kragen (14) gebildet sind.

16. Espressomaschine nach Anspruch 14,
**dadurch gekennzeichnet,**
daß die Schraubenflächen (16) durch nach innen vorspringende Stufen (22) in der Wand des Topfes (5) gebildet sind.

17. Espressomaschine nach einem der Ansprüche 12 bis 14,
**dadurch gekennzeichnet,**
daß die Gegenflächen (11) durch die Enden von zur Schraubenachse parallelen Rippen (10, 23) an der Innenwand des Topfes (5) oder der Außenwand des Ansatzes (14) gebildet sind.

18. Espressomaschine nach Anspruch 12,
**dadurch gekennzeichnet,**
daß die Schraubenflächen (16) durch je zwei nach innen hervorspringende und parallel zueinander verlaufende Wandflächen (34, 35) gebildet werden, die je eine Gewindenut (37) bilden, in die an der Außenfläche des Kragens (14) hervorspringende Zapfen (41) mit ihren Gegenflächen (11) eingreifen.

19. Espressomaschine nach Anspruch 18,
**dadurch gekennzeichnet,**
daß die untere Wandfläche (35) durch eine angeformte Vertiefung (36) am Topf (5) gebildet wird.

20. Espressomaschine nach Anspruch 18,
**dadurch gekennzeichnet,**
daß jede obere Wandfläche (34) durch eine an der Innenwandung des Topfes (5) angeformte Rippe gebildet wird.

21. Espressomaschine nach Anspruch 18,
**dadurch gekennzeichnet,**
daß an der Außenfläche des Kragens (14) mindestens drei am Umfang verteilte und nach oben sich erstreckende Stege (38) ausgebildet sind, die an der Innenwand des Topfes (5) der Auffangschale (6) gleitend anliegen.

22. Espressomaschine nach Anspruch 20,
**dadurch gekennzeichnet,**
daß die Gewindenuten (37) an ihren dem Boden (8) nahen Ende offen sind und an ihren anderen, oberen Enden von einer Wand (39) verschlossen sind.

23. Espressomaschine nach Anspruch 2,
**dadurch gekennzeichnet,**
daß eine zentrale, aus Lagerzapfen (24) und Führungshülse (25) bestehende Teleskopführung geringen Durchmessers vorgesehen ist, die einerseits mit der Abstellplatte (12) und andererseits mit der Auffangschale (6) verbunden ist.

24. Espressomaschine nach Anspruch 10,
**dadurch gekennzeichnet,**
daß die Vertikalführung aus einem an der Abstellplatte (12) ausgebildeten radialen Ansatz (17) besteht, der in einen nach außen offenen vertikalen Schacht (19) im Gehäuse (18) des Geräts eingreift.

## Claims

1. An espresso maker having a discharge port (26) for the espresso beverage prepared and a support plate (12) arranged underneath the discharge port (26) at a relative distance (X), said support plate being supported by an appliance base (1) and adapted to receive a container (27) thereon for collecting the beverage, with a cavity (2) receiving surplus liquid being provided underneath the support plate (12), and with a mechanical vertical adjusting device being provided between the support plate (12) and the appliance base (1), enabling the distance (X) to be varied,
**characterized in that** the support plate (12) is supported on the appliance base (1) through the intermediary of a collecting tray (6) arranged therebetween which provides the cavity (2) for receiving the surplus liquid and is detachably connected with the appliance base (1), that the support plate (12) is also detachably connected with the collecting tray (6), that the vertical adjusting device operates on the basis of a helical gearing (11, 16), and that said helical gearing (11, 16) acts either between the appliance base (1) and the collecting tray (6) or between the collecting tray (6) and the support plate (12), with the appliance base (1) and the collecting tray (6) being relatively movable in the former arrangement, while the collecting tray (6) and the support plate (12) are relatively movable in the latter arrangement.

2. An espresso maker as claimed in claim 1,
**characterized in that** the helical gearing (11, 16) is provided between the collecting tray (6) and the support plate (12).

3. An espresso maker as claimed in claim 2,
**characterized in that** actuation of the helical gearing (11, 16) causes the support plate (12) to be turned relative to the collecting tray (6).

4. An espresso maker as claimed in claim 2,
**characterized in that** actuation of the helical gearing (11, 16) causes the collecting tray (6) to be turned relative to the support plate (12).

5. An espresso maker as claimed in claim 1,
**characterized in that** the helical gearing (11, 16) is provided between the appliance base (1) and the collecting tray (6).

6. An espresso maker as claimed in claim 5,
**characterized in that** actuation of the helical gearing (11, 16) causes the collecting tray (6) to be turned relative to the appliance base (1).

7. An espresso maker as claimed in claim 2 or claim 5,
**characterized in that** the helical gearing (11, 16) is comprised of a self-locking thread.

8. An espresso maker as claimed in claim 2 or claim 5,
**characterized in that** the helical gearing (11, 16) is comprised of a non-self-locking thread.

9. An espresso maker as claimed in claim 7 or claim 8,
**characterized in that** the helical gearing (11, 16) is adapted to be locked in several angular positions by means of a snap-in locking mechanism (4, 9; 20, 21).

10. An espresso maker as claimed in claim 4,
**characterized in that** the support plate (12) is prevented from turning relative to the collecting tray (6) and the appliance base (1) or the housing of the espresso maker by a vertical guide means (17, 19).

11. An espresso maker as claimed in claim 3,
**characterized in that** the collecting tray (6) is prevented from turning relative to the support plate (12) in the appliance base (1) or on the housing of the espresso maker.

12. An espresso maker as claimed in claim 9,
**characterized in that** the bottom (8) of the collecting tray (6) has on its underside projections (21) or recesses (9) opposite to which complementary recesses (20) or projections (4) are provided which are formed on the bottom surface (3) of the appliance base (1).

13. An espresso maker as claimed in claim 2 or claim 5,
**characterized in that** the helical gearing (11, 16) comprises several turns.

14. An espresso maker as claimed in claim 2,
**characterized in that** the collecting tray (6) includes a cylindrical cup structure (5), and that the support plate (12) has on its underside a cylindrical extension (14) longitudinally slidably received in the cup structure (5) of the collecting tray (6) by means of the helical gearing (11, 16), with helicoids (16) being provided on the cup structure (5) or on the extension (14), said helicoids cooperating with mating surfaces (11) on the extension (14) or on the cup structure (5) to provide the helical gearing.

15. An espresso maker as claimed in claim 14,
**characterized in that** the extension on the support plate (12) is configured as a cylindrical collar (14), and that the helicoids (16) are formed by cutouts provided in the collar (14).

16. An espresso maker as claimed in claim 14,
**characterized in that** the helicoids (16) are formed by inwardly projecting shoulders (22) in the wall of the cup structure (5).

17. An espresso maker as claimed in any one the claims 12 to 14,
**characterized in that** the mating surfaces (11) are formed on the inner wall of the cup structure (5) or on the outer wall of the extension (14) by the ends of rib structures (10, 23) extending parallel to the helical axis.

18. An espresso maker as claimed in claim 12,
**characterized in that** the helicoids (16) are formed by two pairs of wall surfaces (34, 35) projecting inwardly and extending parallel to each other, each pair defining a thread groove (37) for engagement with the mating surfaces (11) of pins (41) protruding from the outer surface of the collar (14).

19. An espresso maker as claimed in claim 18,
**characterized in that** the lower wall surface (35) is provided by a recess (36) formed on the cup structure (5).

20. An espresso maker as claimed in claim 18,
**characterized in that** each upper wall surface (34) is provided by a rib structure formed on the inner wall of the cup structure (5).

21. An espresso maker as claimed in claim 18,
**characterized in that** the outer surface of the collar (14) provides at least three circumferentially spaced and upwardly extending ridges (38) which slidably engage the inner wall of the cup structure (5) of the collecting tray (6).

22. An espresso maker as claimed in claim 20,
**characterized in that** the thread grooves (37) are open at their ends close to the bottom (8), while their other upper ends are closed by a wall structure (39).

23. An espresso maker as claimed in claim 2,
**characterized in that** a central telescopic guideway of reduced diameter comprised of a trunnion (24) and a guide bushing (25) is provided, the one being formed on the support plate (12), the other on the collecting tray (6).

24. An espresso maker as claimed in claim 10,
**characterized in that** the vertical guide means is comprised of a radial extension (17) formed on the support plate (12) and engaging an outwardly open, vertical well (19) in the housing (18) of the appliance.

## Revendications

1. Machine à café express, comportant une ouverture de sortie (26) pour la boisson express préparée et un plateau récepteur (12) agencé à distance (X) dessous l'ouverture de sortie (26) et soutenu par un pied (1), plateau sur lequel on peut poser un récipient de collecte (27) qui reçoit la boisson, une chambre de collecte (2) pour le liquide en excès étant prévue au-dessous du plateau récepteur (12), et un dispositif mécanique pour le réglage en hauteur étant prévu entre le plateau récepteur (12) et le pied (1), qui permet une modification de la distance (X),
caractérisée en ce que
l'appui du plateau récepteur (12) sur le pied (1) s'effectue via une coupelle de collecte (6) interposée qui forme la chambre de collecte (2) pour le liquide en excès, et qui est reliée de façon détachable au pied (1), en ce que le plateau récepteur (12) est également relié de façon détachable à la coupelle de collecte (6), en ce que le dispositif de réglage en hauteur travaille sur la base d'un entraînement à vis (11, 16), et en ce que l'entraînement à vis (11, 16) agit soit entre le pied (1) et la coupelle de collecte (6), soit entre la coupelle de collecte (6) et le plateau récepteur (12), dans le premier cas le pied (1) et la coupelle de collecte (6) étant mobiles l'un par rapport à l'autre, et dans le second cas la coupelle de collecte (6) et le plateau récepteur (12) étant mobiles l'un par rapport à l'autre.

2. Machine à café express selon la revendication 1,
caractérisée en ce que l'entraînement à vis (11, 16) est réalisé entre la coupelle de collecte (6) et le plateau récepteur (12).

3. Machine à café express selon la revendication 2,
caractérisée en ce que lors d'un actionnement de l'entraînement à vis (11, 16), le plateau récepteur (12) tourne par rapport à la coupelle de collecte (6).

4. Machine à café express selon la revendication 2,
caractérisée en ce que lors de l'actionnement de l'entraînement à vis (11, 16), la coupelle de collecte (6) tourne par rapport au plateau récepteur (12).

5. Machine à café express selon la revendication 1,
caractérisée en ce que l'entraînement à vis (11, 16) est agencé entre le pied (1) et la coupelle de collecte (6).

6. Machine à café express selon la revendication 5,
caractérisée en ce que lors de l'actionnement de l'entraînement à vis (11, 16), la coupelle de collecte (6) tourne par rapport au pied (1).

7. Machine à café express selon l'une ou l'autre des revendications 2 et 5,
caractérisée en ce que l'entraînement à vis (11, 16) est constitué par un pas de vis auto-bloquant.

8. Machine à café express selon l'une ou l'autre des revendications 2 et 5,
caractérisée en ce que l'entraînement à vis (11, 16) est constitué par un pas de vis non auto-bloquant.

9. Machine à café express selon l'une ou l'autre des revendications 7 et 8,
caractérisée en ce que l'entraînement à vis (11, 16) peut être arrêté par un blocage à crans (4, 9 ; 20, 21) dans plusieurs positions angulaires.

10. Machine à café express selon la revendication 4,
caractérisée en ce que le plateau récepteur (12) est empêché par rapport à la coupelle de collecte (6) de tourner par rapport au pied (1) ou au boîtier de la machine à café express, au moyen d'un guidage vertical (17, 19).

11. Machine à café express selon la revendication 3,
caractérisée en ce que la coupelle de collecte (6) est empêchée de tourner par rapport au plateau récepteur (12) dans le pied (1) ou au niveau du boîtier de la machine à café express.

12. Machine à café express selon la revendication 9,
caractérisée en ce que le fond (8) de la coupelle de collecte (6) présente sur sa face inférieure des saillies (21) ou des évidements (9) à l'opposé desquels se trouvent des évidements (20) ou des saillies (4) formés de façon complémentaire sur la surface de fond (3) du pied (1).

13. Machine à café express selon l'une ou l'autre des revendications 2 et 5,
caractérisée en ce que l'entraînement à vis (11, 16) présente plusieurs pas de vis.

14. Machine à café express selon la revendication 2,
caractérisée en ce que la coupelle de collecte (6) présente un pot cylindrique (5) et en ce que le plateau récepteur (12) est pourvu sur sa face inférieure d'un talon cylindrique (14) qui est monté en déplacement longitudinal via l'entraînement à vis (11, 16) dans le pot (5) de la coupelle de collecte (6), sur le pot (5) ou sur le talon (14) étant prévues des surfaces de vissage (16) qui forment l'entraînement à vis avec des contre-surfaces (11) sur le talon (14) ou sur le pot (5).

15. Machine à café express selon la revendication 14,
caractérisée en ce que le talon du plateau récepteur (12) est réalisé sous la forme d'un col cylindrique (14) et en ce que les surfaces de vissage (16) sont formées par des découpes dans le col (14).

16. Machine à café express selon la revendication 14,
caractérisée en ce que les surfaces de vissage (16) sont formées par des gradins (22) faisant saillie vers l'intérieur dans la paroi du pot (5).

17. Machine à café express selon l'une quelconque des revendications 12 à 14,
caractérisée en ce que les contre-surfaces (11) sont formées par les extrémités de nervures (10, 23) parallèles à l'axe de vissage sur la paroi intérieure du pot (5) ou sur la paroi extérieure du talon (14).

18. Machine à café express selon la revendication 12,
caractérisée en ce que les surfaces de vissage (16) sont formées par respectivement deux surfaces de paroi (34, 35) faisant saillie vers l'intérieur et s'étendant parallèlement l'une à l'autre, qui forment chacune une gorge de vissage (37) dans laquelle s'engagent des tenons (41) faisant saillie à la surface extérieure du col (14), avec leurs contre-surfaces (11).

19. Machine à café express selon la revendication 18,
caractérisée en ce que la surface de paroi inférieure (35) est formée par une dépression (36) moulée dans le pot (5).

20. Machine à café express selon la revendication 18,
caractérisée en ce que chaque surface de paroi supérieure (34) est formée par une nervure moulée sur la paroi intérieure du pot (5).

21. Machine à café express selon la revendication 18,
caractérisée en ce que sur la paroi extérieure du col (14) sont réalisées au moins trois barrettes (38) réparties sur la périphérie et s'étendant vers le haut, qui s'appuient en coulissement contre la paroi intérieure du pot (5) dans la coupelle de collecte (6).

22. Machine à café express selon la revendication 20,
caractérisée en ce que les gorges de vissage (37) sont ouvertes au niveau de leur extrémité près du fond (8), et fermées au niveau de leurs autres extrémités supérieures par une paroi (39).

23. Machine à café express selon la revendication 2,
caractérisée en ce qu'il est prévu un guidage télescopique central de faible diamètre, constitué par un tenon de montage (24) et par une douille de guidage (25), qui est relié d'une part au plateau récepteur (12) et d'autre part à la coupelle de collecte (6).

24. Machine à café express selon la revendication 10,
caractérisée en ce que le guidage vertical est constitué par un talon radial (17) formé au niveau du plateau récepteur (12), qui s'engage dans un puits vertical (19) ouvert vers l'extérieur dans le boîtier (18) de l'appareil.
